(19) Europäisches Patentamt
European Patent Office
Office européen des brevets

(11) **EP 3 499 221 B1**

(12) **FASCICULE DE BREVET EUROPEEN**

(45) Date de publication et mention de la délivrance du brevet:
**11.08.2021 Bulletin 2021/32**

(21) Numéro de dépôt: **18212992.4**

(22) Date de dépôt: **17.12.2018**

(51) Int Cl.:
*G01N 21/64* *(2006.01)*      *G01N 15/14* *(2006.01)*
*G02B 21/16* *(2006.01)*      *G03H 1/00* *(2006.01)*
*G02B 21/06* *(2006.01)*      *G02B 21/36* *(2006.01)*
*G03H 1/04* *(2006.01)*      *G01N 21/47* *(2006.01)*
*G03H 1/08* *(2006.01)*

(54) **DISPOSITIF ET PROCÉDÉ D'OBSERVATION D'UN ÉCHANTILLON AVEC UN SYSTÈME OPTIQUE CHROMATIQUE**

VORRICHTUNG UND VERFAHREN ZUR BEOBACHTUNG EINER PROBE MIT EINEM CHROMATISCHEN OPTISCHEN SYSTEM

DEVICE AND METHOD FOR OBSERVING A SAMPLE WITH A CHROMATIC OPTICAL SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.12.2017 FR 1762390**

(43) Date de publication de la demande:
**19.06.2019 Bulletin 2019/25**

(73) Titulaire: **Commissariat à l'Énergie Atomique et aux Énergies Alternatives 75015 Paris cedex (FR)**

(72) Inventeurs:
• **MANDULA, Ondrej**
  **38000 GRENOBLE (FR)**
• **ALLIER, Cédric**
  **38000 GRENOBLE (FR)**

(74) Mandataire: **INNOV-GROUP**
  **310, avenue Berthelot**
  **69372 Lyon Cedex 08 (FR)**

(56) Documents cités:
**EP-A1- 1 406 081          WO-A1-2015/038967**
**US-A1- 2011 254 943**

• **HONGDA WANG ET AL: "Computational out-of-focus imaging increases the space-bandwidth product in lens-based coherent microscopy", OPTICA, vol. 3, no. 12, 28 novembre 2016 (2016-11-28), pages 1422-1429, XP055465045, US ISSN: 2334-2536, DOI: 10.1364/OPTICA.3.001422**
• **MANDULA ONDREJ ET AL: "Phase from defocus", PROGRESS IN BIOMEDICAL OPTICS AND IMAGING, SPIE - INTERNATIONAL SOCIETY FOR OPTICAL ENGINEERING, BELLINGHAM, WA, US, vol. 10503, 23 février 2018 (2018-02-23), pages 105031Q-105031Q, XP060100999, ISSN: 1605-7422, DOI: 10.1117/12.2287693 ISBN: 978-1-5106-0027-0**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

**DOMAINE TECHNIQUE**

Le domaine technique de l'invention est l'imagerie d'échantillons transparents ou translucides, notamment d'échantillons biologiques, pour obtenir une information relative à la structure de l'échantillon et une information liée à la fluorescence de l'échantillon.

**ART ANTERIEUR**

L'application de la microscopie à des échantillons fluorescents est une technique très courante d'observation, en particulier dans le domaine de la biologie ou du diagnostic médical. Selon cette technique, l'échantillon est disposé dans un plan focal objet d'un objectif, optiquement couplé à un capteur d'image. On illumine l'échantillon selon une longueur d'onde d'excitation, induisant une fluorescence de l'échantillon, de façon à former une image de fluorescence. On illumine également l'échantillon selon une longueur d'onde n'induisant pas de fluorescence, de façon à former une image visible, représentant la structure de l'échantillon. L'image de fluorescence et l'image visible sont fréquemment superposées.

Un problème se pose lorsque l'échantillon est transparent ou translucide. Ce cas de figure est assez fréquent lors de l'observation d'échantillons dans le domaine de la biologie, par exemple lorsque l'échantillon comporte des cellules ou des microorganismes. L'image visible n'est alors pas exploitable, ou pas suffisamment exploitable pour obtenir une information précise quant à la structure de l'échantillon.

Il existe cependant des méthodes d'observations permettant l'obtention d'une image exploitable d'un échantillon transparent ou translucide. En effet, lorsque l'échantillon est légèrement défocalisé par rapport au système optique, il est possible de former une image, dite défocalisée, de l'échantillon. L'échantillon étant illuminé par une onde lumineuse incidente, l'image défocalisée comporte une information relative au déphasage de l'onde lumineuse incidente par l'échantillon. A partir de l'image défocalisée, il est possible d'appliquer des algorithmes de reconstruction holographique, de façon à obtenir une image, dite reconstruite comportant une information relativement précise quant au déphasage produit par l'échantillon. Cette technique est désignée par le terme microscopie de phase. L'image reconstruite permet généralement d'obtenir une information exploitable quant à la structure de l'échantillon. Des exemples d'exploitation d'une image défocalisée sont par exemple décrits dans WO2016075279 ou WO2016097092.

Le document US2011/254943 décrit un procédé d'observation de cellules combinant l'imagerie de fluorescence, pour former une image de noyaux de cellules, et une image formée à partir d'une image acquise selon une configuration défocalisée. Un tel dispositif suppose un déplacement de l'échantillon et/ou d'un système optique pour passer d'une modalité d'imagerie à une autre.

Le document EP1406081 décrit un dispositif pour former une image de fluorescence et une image nette d'un échantillon en lumière blanche. Ce dispositif implique également un déplacement de l'échantillon entre les deux modalités d'imagerie.

Les inventeurs ont développé un dispositif et un procédé d'observation d'un objet, de conception simple et peu onéreux, permettant l'observation d'un échantillon fluorescent, particulièrement adaptée à des échantillons transparents ou translucides.

D'autres avantages et caractéristiques ressortiront plus clairement de la description qui va suivre de modes particuliers de réalisation de l'invention, donnés à titre d'exemples non limitatifs, et représentés sur les figures listées ci-dessous.

**EXPOSE DE L'INVENTION**

Un premier objet de l'invention est un procédé d'observation d'un échantillon fluorescent tel que défini dans la revendication 1, l'échantillon s'étendant selon un plan, dit plan d'échantillon, l'échantillon comportant un agent fluorescent apte à émettre une onde lumineuse de fluorescence, dans une bande spectrale de fluorescence, lorsqu'il est illuminé par une onde lumineuse d'excitation, dans une bande spectrale d'excitation, le procédé comportant les étapes suivantes :

a) illumination de l'échantillon à l'aide d'une première source de lumière, selon une première bande spectrale d'illumination, la première bande spectrale d'illumination s'étendant dans la bande spectrale d'excitation et acquisition d'une première image de l'échantillon, dans la bande spectrale de fluorescence, à l'aide d'un capteur d'image;
b) illumination de l'échantillon à l'aide d'une deuxième source de lumière, selon une deuxième bande spectrale, en dehors de la bande spectrale de fluorescence, l'échantillon s'étendant entre la deuxième source de lumière et le capteur d'image, et acquisition d'une deuxième image de l'échantillon, dans la deuxième bande spectrale, à l'aide du capteur d'image ;

le capteur d'image étant couplé à un système optique, disposé entre le capteur d'image et l'échantillon, le système optique étant tel que :

- dans la bande spectrale de fluorescence, le plan focal objet du système optique est confondu avec le plan de l'échantillon;
- dans la deuxième bande spectrale, le plan focal objet du système optique est décalé par rapport au plan de l'échantillon, le décalage étant supérieur à 20 $\mu$m ou à 30 $\mu$m de telle sorte que:
- la première image est une image focalisée de l'échantillon, représentative d'une fluorescence de l'échantillon ;
- la deuxième image est une image défocalisée de l'échantillon, représentative d'une structure de l'échantillon.

On dispose alors d'un procédé bimodal d'observation d'un échantillon, tirant profit de l'utilisation d'un système optique chromatique, et permettant de réaliser une première image de l'échantillon selon une modalité de fluorescence et une deuxième image de l'échantillon selon une modalité de type microscopie holographique. Le décalage est dû aux aberrations chromatiques du système optique. La deuxième image peut notamment être une image représentative de la phase d'une onde lumineuse dite d'exposition, à laquelle est exposé le capteur d'image lors de l'acquisition de la deuxième image.

Le procédé comporte une étape c) d'application d'un opérateur de reconstruction holographique à partir de la deuxième image, de façon à obtenir une image reconstruite de l'échantillon dans un plan de reconstruction, et notamment dans le plan de l'échantillon.

La deuxième bande spectrale peut être décalée, par rapport à la bande spectrale de fluorescence, d'au moins 150 nm et de préférence d'au moins 200 nm.

Le capteur d'image, le système optique et l'échantillon sont fixes entre l'acquisition de la première image et l'acquisition de la deuxième image.

De préférence, dans la deuxième bande spectrale, le plan focal objet est décalé d'une distance inférieure à 1 mm du plan de l'échantillon, et de préférence d'une distance inférieure à 500 $\mu$m du plan de l'échantillon, cette distance étant de préférence inférieure à 250 $\mu$m.

La première source de lumière peut être disposée dans un demi-espace délimité par le plan de l'échantillon et comprenant le capteur d'image. Alternativement, la première source de lumière peut être disposée dans un demi-espace délimité par le plan de l'échantillon et comprenant la deuxième source de lumière.

Les étapes a) et b) sont de préférence réalisées successivement, l'étape a) étant réalisée avant l'étape b) ou réciproquement. Dans la deuxième bande spectrale, le décalage du plan focal objet du système optique est supérieur à 20 $\mu$m, et de préférence supérieur à 50 $\mu$m. Il est de préférence inférieur à 1 mm, voire 500 $\mu$m. Il peut être compris entre 50 $\mu$m et 250 $\mu$m, la plage 50 $\mu$m - 150 $\mu$m étant préférée.

Un deuxième objet de l'invention est un dispositif d'observation d'un échantillon fluorescent, tel que défini dans la revendication 7, l'échantillon étant apte à émettre une onde lumineuse dans une bande spectrale de fluorescence lorsqu'il est illuminé selon une bande spectrale d'excitation, le dispositif comportant :

- une première source de lumière, configurée pour émettre une onde lumineuse dans une première bande spectrale, s'étendant dans une bande spectrale d'excitation de l'échantillon ;
- une deuxième source de lumière configurée pour émettre une onde lumineuse selon une deuxième bande spectrale, s'étendant en dehors la bande spectrale de fluorescence;
- un capteur d'image, optiquement couplé à un système optique;
- un support, destiné à recevoir l'échantillon, de telle sorte que l'échantillon s'étende selon un plan, dit plan d'échantillon, ce dernier étant disposé entre le système optique et la deuxième source de lumière ;
- le système optique définissant :

   d ans la bande spectrale de fluorescence, un premier plan focal objet, confondu avec le plan de l'échantillon;
   d ans la deuxième bande spectrale, un deuxième plan focal objet, distant du plan de l'échantillon, d'au moins 20 $\mu$m, ou d'au moins 30 $\mu$m ;

de telle sorte que le capteur d'image est configuré pour acquérir :

- une image nette de l'échantillon, dans la bande spectrale de fluorescence, lorsque ce dernier est illuminé par la première source de lumière;
- une image défocalisée de l'échantillon, dans la deuxième bande spectrale, lorsque l'échantillon est illuminé par la deuxième source de lumière.

La distance entre le premier plan objet et le deuxième plan objet est de préférence inférieure à 1 mm, et de préférence inférieure à 500 $\mu$m ou à 250 $\mu$m.

Le dispositif comprend un processeur, apte à appliquer un opérateur de reconstruction holographique à une image acquise par le capteur d'image, de façon à reconstruire une image représentative de l'échantillon, dans un plan de reconstruction distant d'un plan de détection selon lequel s'étend le capteur d'image, et de préférence dans le plan de l'échantillon.

Le dispositif peut comporter un filtre, s'étendant entre l'échantillon et le capteur d'image, présentant une bande passante dite de fluorescence, correspondant à la bande spectrale de fluorescence. Le filtre permet de filtrer tout ou partie de l'onde lumineuse selon la bande spectrale d'excitation.

Le filtre peut présenter une bande passante auxiliaire, distincte de la bande passante de fluorescence, correspondant à tout ou partie de la deuxième bande spectrale. La bande passante de fluorescence du filtre présente avantageusement une largeur de bande inférieure à 100 nm. La première source de lumière peut être disposée dans un demi-espace délimité par le plan de l'échantillon et comprenant le capteur d'image. La première source de lumière peut être disposée dans un demi-espace délimité par le plan de l'échantillon et comprenant la deuxième source de lumière.

## FIGURES

La figure 1A représente un dispositif de l'invention selon une première configuration.

La figure 1B représente le dispositif représenté sur la figure 1A selon une deuxième configuration.

La figure 1C est une variante du dispositif représenté sur les figures 1A et 1B.

La figure 1D illustre trois plans focaux objet d'un système optique espacés les uns des autres, à chaque plan focal correspondant une bande spectrale.

La figure 2A montre différentes images de fluorescence, progressivement défocalisées.

La figure 2B est une évolution d'un rapport signal à bruit (axe des ordonnées) des images illustrées sur la figure 2A, en fonction d'une distance de défocalisation (axe des abscisses), exprimée en $\mu$m.

Les figures 3A à 3D illustrent un exemple de mise en oeuvre d'un procédé d'observation d'un échantillon : la figure 3A est une image défocalisée de l'échantillon. La figure 3B est une image de fluorescence de l'échantillon. La figure 3C est une image, dite image de phase, de l'échantillon, obtenue par application d'un opérateur de reconstruction holographique à l'image défocalisée de l'échantillon. La figure 3D est une superposition entre l'image de phase et de l'image de fluorescence de l'échantillon.

La figure 4 montre les principales étapes d'un procédé selon l'invention.

Les figures 5A, 5B et 5C montrent respectivement des images de phase, de fluorescence ainsi que des images de phase et de fluorescence superposées, les images étant régulièrement acquises durant un intervalle temporel de 75 h.

La figure 6A montre les caractéristiques chromatiques d'un système optique.

La figure 6B montre des bandes passantes de transmission d'un filtre d'excitation, d'un miroir dichroïque ainsi que d'un filtre d'émission.

La figure 6C représente un dispositif de l'invention selon une première configuration.

La figure 6D représente le dispositif représenté sur la figure 6C selon une deuxième configuration.

Les figures 7A, 7B et 7C montrent respectivement des images de fluorescence, respectivement avec trois agents fluorescents différents.

La figure 7D montre une image de phase.

## EXPOSE DE MODES DE REALISATION PARTICULIERS

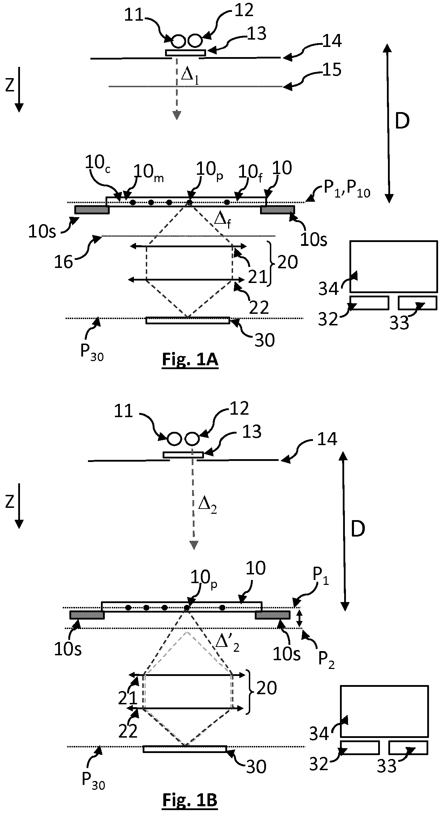

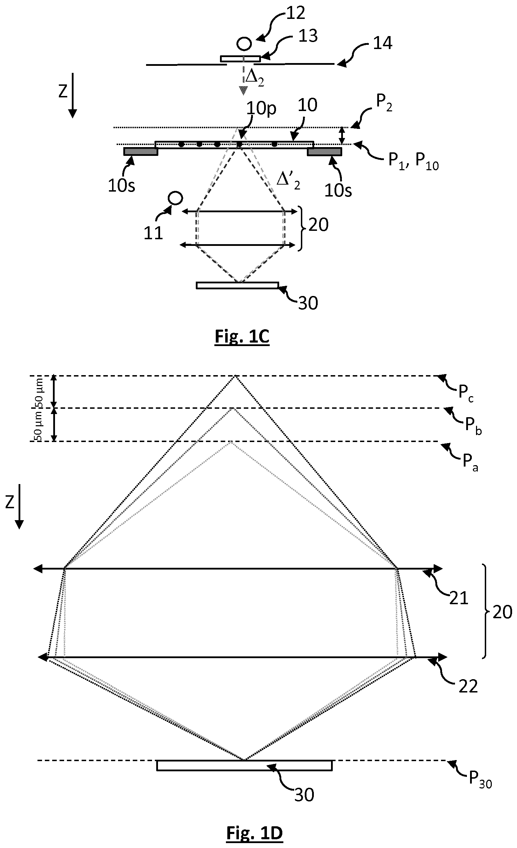

Les figures 1A et 1B représentent un dispositif permettant la mise en œuvre de l'invention. Le dispositif comporte une première source de lumière 11 et une deuxième source de lumière 12. La première source de lumière 11 est configurée pour émettre une première onde lumineuse $\Delta_1$ dans une première bande spectrale $\Delta\lambda_1$. La deuxième source de lumière 12 est configurée pour émettre une deuxième onde lumineuse $\Delta_2$ dans une deuxième bande spectrale $\Delta\lambda_2$. La deuxième onde lumineuse $\Delta_2$ se propage selon un axe de propagation Z. Dans cet exemple, la première onde lumineuse $\Delta_1$ se propage parallèlement à la deuxième onde lumineuse $\Delta_2$, mais cette condition n'est pas nécessaire, comme décrit en lien avec la figure 1C. La première bande spectrale $\Delta\lambda_1$ et la deuxième bande spectrale $\Delta\lambda_2$ sont respectivement centrées autour d'une première longueur d'onde $\lambda_1$ et autour d'une deuxième longueur d'onde $\lambda_2$.

Le dispositif comporte un support d'échantillon 10s configuré pour recevoir un échantillon 10, de telle sorte que l'échantillon soit maintenu sur le support 10s en s'étendant selon un plan, dit plan d'échantillon $P_{10}$. L'échantillon 10 est un échantillon que l'on souhaite caractériser. Il comprend notamment un milieu liquide $10_m$ dans lequel baignent des particules $10_p$. Le milieu $10_m$ peut être un liquide tampon. Il peut également comporter un liquide corporel, à l'état pur ou dilué. Par liquide corporel, on entend un liquide généré par un corps vivant. Il peut en particulier s'agir, à titre non limitatif, de sang, d'urine, de liquide céphalorachidien, de sperme, de lymphe. Par particule, on entend notamment une cellule, par exemple une cellule sanguine, ou un microorganisme, par exemple une bactérie. L'échantillon 10 est, dans cet exemple, contenu dans une chambre fluidique $10_c$. La chambre fluidique est par exemple une chambre fluidique d'épaisseur 100 $\mu$m. L'épaisseur de la chambre fluidique, et donc de l'échantillon 10, selon l'axe de propagation Z, varie typiquement entre 10 $\mu$m et 1 cm, et est de préférence comprise entre 20 $\mu$m et 500 $\mu$m.

L'échantillon peut être un échantillon solide transparent ou translucide. Il peut par exemple s'agir d'une fine lame de tissu biologique, par exemple d'une lame d'anatomopathologie, ou encore d'un extrait sec d'un liquide, par exemple d'un liquide biologique.

L'échantillon comporte un agent fluorescent $10_f$, ou fluorophore. Il peut s'agir d'un agent exogène, ajouté à l'échantillon préalablement à son observation, ou d'un agent endogène, naturellement présent dans l'échantillon. Lorsqu'il est illuminé dans une bande spectrale d'excitation $\Delta\lambda_e$, l'agent fluorescent $10_f$ émet une onde lumineuse de fluorescence $\Delta_f$ dans une bande spectrale de fluorescence $\Delta\lambda_f$. Un agent fluorescent exogène est généralement ajouté à l'objet, de manière à se fixer spécifiquement sur des cibles, par exemple une certaine catégorie de cellules, ou plus généralement sur des structures biologiques d'intérêt, par exemple un noyau d'une cellule, une base d'ADN, une cellule cancéreuse, ou une structure biologique comportant un ligand apte à se greffer préférentiellement avec l'agent fluorescent. L'agent fluorescent utilisé peut être du vert d'indocyanine, ou ICG (acronyme anglais signifiant IndoCyanine Green). Dans ce cas, la bande spectrale d'excitation $\Delta\lambda_e$ est comprise entre 750 nm et 800 nm, la bande spectrale de fluorescence $\Delta\lambda_f$ étant comprise entre 820 nm et 870 nm. L'agent fluorescent utilisé peut être du DAPI (4',6-diamidino-2-phénylindole). Dans ce cas, la bande spectrale d'excitation $\Delta\lambda_e$ est comprise entre 350 nm et 400 nm, la bande spectrale de fluorescence $\Delta\lambda_f$ étant comprise entre 430 nm et 530 nm. Le DAPI est connu pour se fixer sur certaines bases d'ADN. Son utilisation permet par exemple de localiser l'ADN dans une cellule. On peut également utiliser un marqueur Hoechst, dont les propriétés optiques sont proches du DAPI, mais étant moins toxique.

Un des objectifs du dispositif 1 est l'observation de l'échantillon 10 selon une modalité de fluorescence. Aussi, la première bande spectrale $A\lambda_1$ correspond à la bande spectrale d'excitation $\Delta\lambda_e$ de l'agent fluorescent $10_f$ présent dans l'échantillon 10.

La distance D entre la deuxième source de lumière 12 et l'échantillon 10 est de préférence supérieure à 1 cm. Elle est de préférence comprise entre 2 et 30 cm. La deuxième source de lumière, vue par l'échantillon, est considérée comme ponctuelle. Cela signifie que son diamètre (ou sa diagonale) est préférentiellement inférieur au dixième, mieux au centième de la distance entre l'échantillon et la source de lumière. Sur la figure 1A, la première source de lumière 11 et la deuxième source de lumière 12 sont des diodes électroluminescentes. Elles peuvent être associées à un diaphragme 14, ou filtre spatial. L'ouverture du diaphragme est typiquement comprise entre 5 $\mu$m et 1 mm, de préférence entre 50 $\mu$m et 500 $\mu$m. Dans cet exemple, le diaphragme a un diamètre est de 150 $\mu$m. Selon une autre configuration, le diaphragme peut être remplacé par une fibre optique, dont une première extrémité est placée face à chaque source de lumière et dont une deuxième extrémité est placée en regard de l'échantillon 10. Le dispositif représenté sur les figures 1A et 1B comporte également un diffuseur 13, disposé entre les sources de lumière et le diaphragme 14. L'usage d'un tel diffuseur permet de s'affranchir de contraintes de centrage des sources de lumière par rapport à l'ouverture du diaphragme 14. La fonction d'un tel diffuseur est de répartir le faisceau lumineux, produit par une source de lumière élémentaire 11 selon un cône d'angle a. De préférence, l'angle de diffusion a varie entre 10° et 80°. Alternativement, la première et/ou la deuxième source de lumière peuvent être une source laser, telle une diode laser. Lorsqu'une source de lumière est une diode laser, il n'est pas utile de lui associer un filtre spatial ou un diffuseur.

Dans l'exemple représenté sur la figure 1A, l'échantillon 10 est disposé entre la première source de lumière 11 et le capteur d'image 30. Cela n'est cependant pas nécessaire. Dans l'exemple représenté sur la figure 1C, la première source de lumière 11 est disposée dans un demi-espace délimité par le plan de l'échantillon $P_{10}$ et comportant le capteur d'image 30.

De préférence, la première bande spectrale $\Delta\lambda_1$ et/ou la deuxième bande spectrale $\Delta\lambda_2$ ont une largeur de bande inférieure à 200 nm, voire 150 nm ou 100 nm. Par largeur de bande spectrale, on entend une largeur à mi-hauteur de la bande spectrale.

Selon un autre mode de réalisation, le dispositif comporte une source de lumière, dite source de lumière principale, de large bande spectrale, de type source de lumière blanche. L'illumination de l'échantillon par la première bande spectrale $\Delta\lambda_1$ et par la deuxième bande spectrale $\Delta\lambda_2$ est respectivement obtenue en disposant un premier filtre passe bande, définissant la première bande spectrale, et un deuxième filtre passe bande, définissant la deuxième bande spectrale, entre la source de lumière principale et l'échantillon. La première source de lumière 11 est obtenue par l'association de la source de lumière principale et du premier filtre passe bande. La deuxième source de lumière 12 est obtenue par l'association de la source de lumière principale et du deuxième filtre passe bande. La largeur des première et deuxième bandes spectrales sont respectivement déterminées par les bandes passantes respectives des premier et deuxième filtres passe bande.

L'échantillon 10 est disposé entre la deuxième source de lumière 12 et un capteur d'image 30. Ce dernier s'étend de préférence parallèlement, ou sensiblement parallèlement au plan $P_{10}$ selon lequel s'étend l'échantillon 10. Le terme sensiblement parallèlement signifie que les deux éléments peuvent ne pas être rigoureusement parallèles, une tolérance angulaire de quelques degrés, inférieure à 20° ou 10° étant admise. Dans cet exemple, l'échantillon s'étend selon un plan $P_{10}$, perpendiculaire à l'axe de propagation Z. La première source de lumière 11 peut être disposée :

- dans un demi-espace délimité par le plan de l'échantillon $P_{10}$ et comprenant la deuxième source de lumière 12
- ou dans un demi-espace délimité par le plan de l'échantillon $P_{10}$ et comprenant le capteur d'image 30.

Le capteur d'image 30 est configuré pour former une image de l'échantillon selon un plan de détection $P_{30}$. Dans l'exemple représenté, le capteur d'image 30 comporte une matrice de pixels, de type CCD ou un CMOS. Le plan de détection $P_{30}$ s'étend de préférence perpendiculairement à l'axe de propagation Z de la deuxième onde lumineuse incidente $\Delta 2$. Dans l'exemple représenté, le capteur d'image 30 est un capteur CMOS IDS UI-1942LE-M comportant 3840 par 2748 pixels, la taille de chaque pixel étant de 1.67 $\mu$m x 1.67 $\mu$m.

Le capteur d'image 30 est optiquement couplé à l'échantillon 10 par un système optique 20. Dans l'exemple représenté, le système optique comporte un objectif 21 et une lentille de tube 22. Le système optique 20 est chromatique : pour un même plan focal image, en l'occurrence confondu avec le plan de détection $P_{30}$, la position du plan focal objet varie en fonction de la longueur d'onde. Réciproquement, pour un même plan focal objet, en l'occurrence confondu avec la plan de l'échantillon $P_{10}$, la position du plan focal image varie en fonction de la longueur d'onde. Ainsi, lorsque deux longueurs d'onde sont écartées de 100 nm, les plans focaux objets (ou image) correspondant respectivement à chaque longueur d'onde sont espacés d'au moins 10 $\mu$m, et de préférence d'au moins 20 $\mu$m, ou 30 $\mu$m, voire 50 $\mu$m. Dans cet exemple, l'objectif 21 est un objectif Motic CCIS EF-N Plan Achromat 10x, d'ouverture numérique 0.25. Il est optiquement couplé à une lentille 22, cette dernière étant à l'origine des aberrations chromatiques du système optique 20, résultant à l'espacement entre les plans focaux objet (ou image) en fonction de la longueur d'onde. La lentille est, dans cet exemple, une lentille Thorlabs LBF254-050N-BK7 Best Form Lens, diamètre 1 ", f = 50 mm.

La figure 1A représente le dispositif dans une première configuration selon laquelle l'échantillon est illuminé, par la première source de lumière 11, dans la première bande spectrale $\Delta\lambda_1$, qui correspond à la bande spectrale d'excitation $\Delta\lambda_e$ de l'agent fluorescent $10_f$. Sous l'effet de cette illumination, l'agent fluorescent émet une onde de fluorescence $\Delta_f$, dans la bande spectrale de fluorescence $\Delta\lambda_f$. L'objectif 20 est disposé de telle sorte que dans la bande spectrale de fluorescence $\Delta\lambda_f$, le premier plan focal objet $P_1$ corresponde au plan $P_{10}$ selon lequel s'étend l'échantillon 10, ce qui correspond au plan selon lequel est émis l'onde lumineuse de fluorescence $\Delta_f$. Le plan focal image conjugué du premier plan focal objet $P_1$ est le plan de détection $P_{30}$. Ainsi, selon cette configuration, le capteur d'image 30 acquiert une première image $I_1$ nette de l'échantillon, cette image étant représentative de la fluorescence de l'échantillon 10. Elle permet d'observer une distribution spatiale de l'agent fluorescent dans l'échantillon.

Selon cette configuration, un filtre optique 15, dit filtre d'excitation, peut être disposé entre la première source de lumière 11 et l'échantillon 10. Le filtre d'excitation 15 permet d'ajuster la première bande spectrale $\Delta\lambda_1$ de telle sorte que l'onde lumineuse $\Delta_1$ illuminant l'échantillon corresponde à tout ou partie de la bande spectrale d'excitation $\Delta\lambda_e$.

Un filtre optique 16, dit filtre de fluorescence, peut être disposé entre l'échantillon 10 et le capteur d'image 30. Le filtre de fluorescence 16 permet de limiter l'onde lumineuse détectée par le capteur d'image 30 à la bande spectrale de fluorescence $\Delta\lambda_f$. Cela permet notamment d'éviter un parasitage de l'image acquise par le capteur d'image par de la lumière parasite ne provenant pas de la fluorescence de l'échantillon. Le filtre optique 16 présente une bande passante de fluorescence, correspondant à la bande spectrale de fluorescence $\Delta\lambda_f$. Il peut également s'agir un filtre multi-bandes, dont la bande passante inclut à la fois la bande spectrale de fluorescence $\Delta\lambda_f$ et une deuxième bande spectrale $\Delta\lambda_2$, décrite ci-après. Par filtre multi-bandes, on entend un filtre dont la bande passante inclut des bandes passantes distinctes et espacées les unes des autres. Il peut également s'agir d'un filtre passe haut, laissant passer les longueurs d'onde situées au-delà de la bande spectrale d'excitation $\Delta\lambda_e$ et bloquant les longueurs d'onde dans la bande spectrale d'excitation.

Selon une autre configuration, représentée sur la figure 1B, l'échantillon est illuminé par la deuxième source de lumière 12, dans la deuxième bande spectrale $\Delta\lambda_2$, cette dernière étant différente de la bande spectrale de fluorescence $\Delta\lambda_f$ de l'agent fluorescent $10_f$. De préférence, la deuxième bande spectrale est centrée sur une longueur d'onde $\lambda_2$, qui est décalée d'au moins 100 nm, voire 150 nm ou même 200 nm de la longueur d'onde centrale $\lambda_f$ de la bande spectrale de fluorescence. Il est en effet préférable que la bande spectrale de fluorescence $\Delta\lambda_f$ et la deuxième bande spectrale $\Delta\lambda_2$ ne se superposent pas, ou de façon marginale. Par exemple, plus de 80%, ou plus de 90%, des intensités lumineuses émises respectivement dans chacune de ces bandes spectrales ne se recoupent pas. En considérant que chaque bande spectrale est délimitée par une borne inférieure et une borne supérieure, définissant la largeur à mi-hauteur de la bande spectrale, il est préférable que la borne supérieure d'une bande spectrale soit distante, d'au moins 50 nm, voire d'au moins 100 nm, de la borne inférieure d'une autre bande spectrale.

L'objectif 20 est tel que dans la deuxième bande spectrale $\Delta\lambda_2$, le deuxième plan focal objet $P_2$ est décalé par rapport au premier plan focal objet $P_1$, ce dernier correspondant au plan $P_{10}$ selon lequel s'étend l'échantillon 10. Le plan focal image, conjugué du deuxième plan focal objet $P_2$, est le plan de détection $P_{30}$. Il peut également être décalé par rapport à ce dernier. Ainsi, selon cette configuration, le capteur d'image 30 acquiert une deuxième image $I_2$ défocalisée de l'échantillon 10, dans la deuxième bande spectrale $\Delta\lambda_2$. Sur la figure 1B, on a représenté le deuxième plan focal objet $P_2$, ainsi que le plan de l'échantillon $P_{10}$, ce dernier étant confondu avec le premier plan focal $P_1$. Selon cette configuration, le capteur d'image 30 est exposé à une onde lumineuse $\Delta'_2$, dite one lumineuse d'exposition. L'image acquise comporte des figures d'interférence, pouvant également être désignées par le terme "figures de diffraction", formées par :

- une partie de la deuxième onde lumineuse $\Delta_2$ émise par la deuxième source de lumière 12, et ayant traversé l'échantillon sans interagir avec ce dernier ;
- des ondes de diffraction, formées par la diffraction d'une partie de la deuxième onde lumineuse $\Delta_2$ dans l'échantillon.

La deuxième image $I_2$ acquise par le capteur d'image 30 comporte des figures d'interférences (ou figures de diffraction), représentatives de l'échantillon 10, ou des particules $10_p$ composant ce dernier. De façon plus générale, la deuxième image acquise $I_2$ par le capteur d'image 30 est représentative de la structure de l'échantillon.

Un processeur 32, par exemple un microprocesseur, est apte à traiter la deuxième image $I_2$ acquise par le capteur d'image 30. En particulier, le processeur est un microprocesseur 32 relié à une mémoire programmable 33 dans laquelle est stockée une séquence d'instructions pour effectuer les opérations de traitement d'images et de calculs décrites dans cette description. Le processeur 32 peut être couplé à un écran 34 permettant l'affichage d'images acquises par le capteur d'image 30 ou calculées par le processeur 32.

La deuxième image $I_2$ acquise par le capteur d'image 30 selon la deuxième configuration, défocalisée, ne permet pas d'obtenir une représentation précise de l'échantillon observé. De façon usuelle dans le domaine de l'holographie, on applique, à la deuxième image $I_2$, un opérateur de reconstruction holographique $h$, de façon à calculer une expression complexe $A$ représentative de l'onde lumineuse $\Delta'_2$, à laquelle est exposé le capteur d'image, et cela en tout point de coordonnées $(x, y, z)$ de l'espace, et en particulier dans un plan, dit de reconstruction $P_z$, situé à une distance $|z|$, dite distance de reconstruction, du capteur d'image 30. Le plan de reconstruction est de préférence le plan $P_{10}$ selon lequel s'étend l'échantillon 10. L'expression complexe $A(x, y, z)$ au point de coordonnées $(x,y,z)$ s'obtient à partir de la deuxième image $I_2$, par un produit de convolution selon l'équation:

$$A(x, y, z) = I_2(x, y, z) * h,\text{ le symbole * désignant l'opérateur produit de convolution.}$$

Les coordonnées $(x,y)$ désignent une position planaire dans un plan radial perpendiculaire à l'axe de propagation Z. La coordonnée $z$ désigne une coordonnée selon l'axe de propagation Z. Avant l'application de l'opérateur de reconstruction, la deuxième image $I_2$ peut être normalisée ou subir un pré-traitement avant la convolution par l'opérateur de reconstruction.

L'opérateur de reconstruction $h$ a pour fonction de décrire la propagation de la lumière entre le capteur d'image 30 et un point de coordonnées $(x,y,z)$, situé à une distance $|z|$ du capteur d'image. L'expression complexe A de l'onde lumineuse d'exposition $\Delta'_2$, en tout point de coordonnées $(x, y, z)$ de l'espace, est telle que : $A(x,y,z) = M(x,y,z)e^{j\varphi(x,y,z)}$ où $M(x,y,z)$ et $\varphi(x,y,z)$ désignent respectivement le module et la phase de l'onde lumineuse d'exposition $\Delta'_2$, au point de coordonnées $(x, y, z)$. On a alors :

- $M(x,y,z) = abs\ [A(x,y,z)]$ ;
- $\varphi(x,y,z) = arg\ [A(x,y,z)]$ ;

Les opérateurs $abs$ et $arg$ désignent respectivement le module et l'argument.

L'expression complexe $A$ est une grandeur complexe dont l'argument et le module sont respectivement représentatifs de la phase et de l'amplitude de l'onde lumineuse d'exposition détectée par le capteur d'image 30. Le produit de convolution de la deuxième image $I_2$ par l'opérateur de reconstruction $h$ peut permettre d'obtenir une image complexe $A_z$ représentant une distribution spatiale de l'expression complexe $A$ dans un plan de reconstruction $P_z$, s'étendant à une distance $|z|$ du plan de détection $P_{30}$.

L'image complexe $A_z$ correspond à une image complexe de l'échantillon dans le plan de reconstruction $P_z$. Elle représente également une distribution spatiale bidimensionnelle de l'expression complexe $A$ décrivant l'onde d'exposition $\Delta'_2$. Un tel procédé, désigné par le terme reconstruction holographique, permet notamment de reconstruire une image $M_z$ du module ou de la phase $\varphi_z$ de l'expression complexe décrivant l'onde lumineuse d'exposition $\Delta'_2$, dans le plan de reconstruction. L'image du module ou de la phase de l'onde lumineuse d'exposition $\Delta'_2$ s'obtient respectivement selon les expressions suivantes :

$M_z$ = mod $(A_z)$ et $\varphi_z$ = arg($A_z$).

L'opérateur de reconstruction est par exemple la fonction de Fresnel-Helmholtz, telle que :

$$h(x, y, z) = \frac{1}{j\lambda z} e^{j2\pi\frac{z}{\lambda}} \exp(j\pi \frac{x^2+y^2}{\lambda z}).$$

Des exemples de reconstructions holographiques sont décrits dans la publication Seo S et al, "High-Throughput lens-free blood analysis on a chip", Anal Chem. 2010 June 1 ; 82(11): 4621-4627, ou encore dans le document WO2017162985.

Lorsque l'échantillon est transparent, l'image reconstruite est de préférence une image de la phase $\varphi_z$ de l'expression complexe de l'onde lumineuse $\Delta'_2$ parvenant au capteur d'image 30. Lorsque le plan de reconstruction est un plan selon lequel s'étend l'échantillon $P_{10}$, une telle image donne une représentation visuelle relativement précise de la structure de l'échantillon.

Ainsi, l'invention permet d'obtenir une première image $I_1$ représentative de la fluorescence de l'échantillon, et une deuxième image $I_2$ qui, après reconstruction holographique, est représentative de la structure de l'échantillon 10. Un aspect remarquable de l'invention est qu'entre l'acquisition de la première image et l'acquisition de la deuxième image, ni l'échantillon 10, ni le capteur d'image 30, ni le système optique 20 ne sont déplacés. Cela évite le recours à des moyens de déplacement et de positionnement du système optique. On peut ainsi acquérir successivement une première image et une deuxième image de l'échantillon en activant successivement la première source de lumière 11, puis la deuxième source de lumière 12. Lorsqu'on acquiert la première image $I_1$, il est préférable que la deuxième source de lumière 12 soit éteinte, de façon à éviter l'apparition de lumière parasite sur la première image. Il est également souhaitable que la première source de lumière 11 soit éteinte lorsqu'on acquiert la deuxième image $I_2$. De préférence, la première image et la deuxième image sont acquises séquentiellement. Le dispositif 1 permet une observation bimodale de l'échantillon de façon simple, ne nécessitant aucun ajustement d'un plan focal du système optique 20 entre les deux modalités. Le temps de pose de la première image peut être plus long que le temps de pose de la deuxième image, car l'intensité de l'onde lumineuse de fluorescence est généralement faible.

Lorsqu'on utilise un filtre optique multi-bandes, tel que précédemment décrit, tous les composants du dispositif, y compris l'échantillon 10, peuvent être fixes, aucun mouvement n'étant à prévoir entre l'acquisition de la première image $I_1$ et de la deuxième image $I_2$. Cela permet une commutation rapide entre l'acquisition de la première image et l'acquisition de la deuxième image.

La figure 1C montre une configuration permettant également l'acquisition d'une deuxième image. Alors que dans la figure 1B, le plan focal objet $P_2$ dans la deuxième bande spectrale $\Delta\lambda_2$ est disposé entre l'échantillon et le système optique 20, dans la figure 1C, le plan focal objet $P_2$ est disposé entre l'échantillon 10 et la deuxième source de lumière 12.

Sur la figure 1D, on a représenté trois plans focaux objet d'un objectif 20 convenant à une mise en œuvre de l'invention. L'objectif comporte trois plans focaux objets $P_a$, $P_b$, $P_c$, chaque plan focal correspondant respectivement à une bande spectrale bleue (par exemple 450 nm $\pm$ 20 nm), verte (par exemple 550 nm $\pm$ 20 nm) et rouge (par exemple 650 nm $\pm$ 20 nm). La distance entre deux plans focaux adjacents est par exemple comprise entre 50 $\mu$m et 100 $\mu$m. De préférence, le système optique chromatique 20 est configuré de telle sorte que deux plans focaux objets correspondant respectivement à deux bandes spectrales espacées de 100 nm, sont distants l'un de l'autre d'au moins 20 $\mu$m, voire au moins 30 $\mu$m ou au moins 50 $\mu$m.

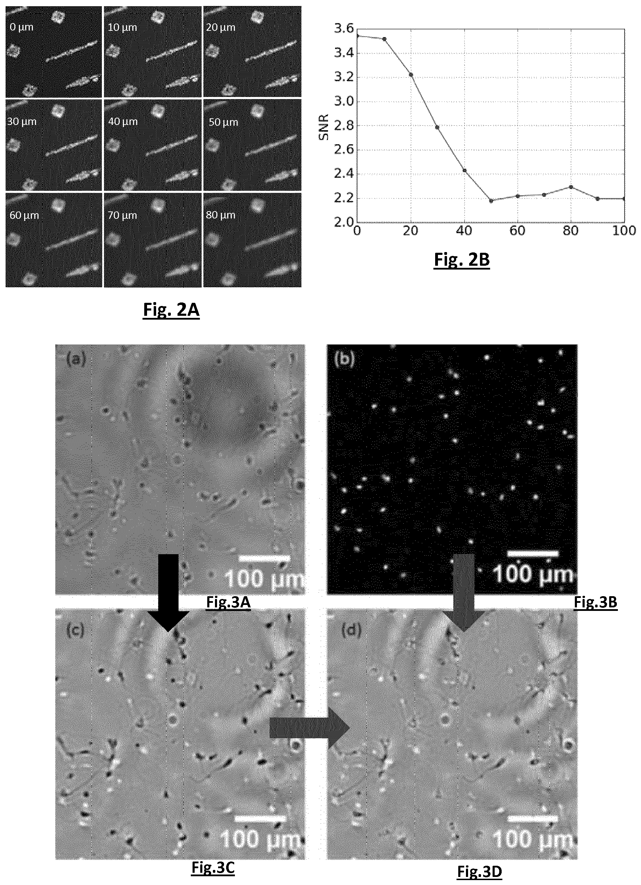

La figure 2A montre des images d'un échantillon fluorescent successivement acquises en éloignant progressivement l'échantillon du premier plan de focalisation $P_1$. Le décalage par rapport au premier plan $P_1$, exprimé en $\mu$m, est indiqué sur chaque image. Sur chaque image, on a calculé un rapport signal sur bruit SNR relatif à chaque image. Le rapport signal sur bruit correspond à l'intensité maximale, sur l'image, divisée par une estimation d'un niveau de bruit sur l'image. La figure 2B montre l'évolution du rapport SNR en fonction du décalage par rapport au premier plan objet $P_1$. Cela montre que l'image de fluorescence $I_1$ doit être préférentiellement acquise lorsque l'échantillon est disposé dans le plan focal objet du système optique correspondant à la bande spectrale de fluorescence. Un décalage, même minime, est préjudiciable à la qualité de l'image de fluorescence obtenue.

La mise en œuvre de l'invention peut être résumée sur les figures 3A à 3D. Dans cet exemple, l'échantillon est composé de neurones marqués au DAPI. La figure 3B montre une image de fluorescence de l'échantillon ($\Delta\lambda_f$ centrée sur 452 nm), dite première image $I_1$, le dispositif étant configuré comme décrit en lien avec la figure 1A, la source de lumière étant une diode électroluminescente émettant dans l'UV. La figure 3A montre une deuxième image de l'échantillon, défocalisée, acquise alors que le dispositif est disposé comme décrit en lien avec la figure 1B, dans une bande spectrale $\Delta\lambda_2$ centrée sur 543.5 nm et de largeur spectrale 2.1 nm. Dans cet exemple, le plan focal objet de l'échantillon, dans la deuxième bande spectrale $\Delta\lambda_2$, est distant de 50 $\mu$m du plan focal objet de l'échantillon dans la bande spectrale

de fluorescence $\Delta\lambda_f$ du DAPI. La deuxième image de l'échantillon a fait l'objet d'un algorithme de reconstruction holographique, selon le procédé décrit dans la demande de brevet WO2017162985, et plus particulièrement dans les étapes 110 à 160 décrites dans cette dernière. La reconstruction a été effectuée dans le plan selon lequel s'étend l'échantillon, ce dernier étant confondu avec le plan focal objet $P_1$ de la première modalité. On a représenté, sur la figure 3C, l'image de phase de l'expression complexe calculée dans le plan de l'échantillon. Les différentes structures neuronales apparaissent nettement. Ainsi, l'image de phase permet d'obtenir une information exploitable quant à la structure de l'échantillon.

La figure 3D est une superposition de l'image de phase représentée sur la figure 3C avec l'image de fluorescence obtenue sur l'image 3B. Cela permet de mettre en évidence le marquage des noyaux des neurones par le DAPI.

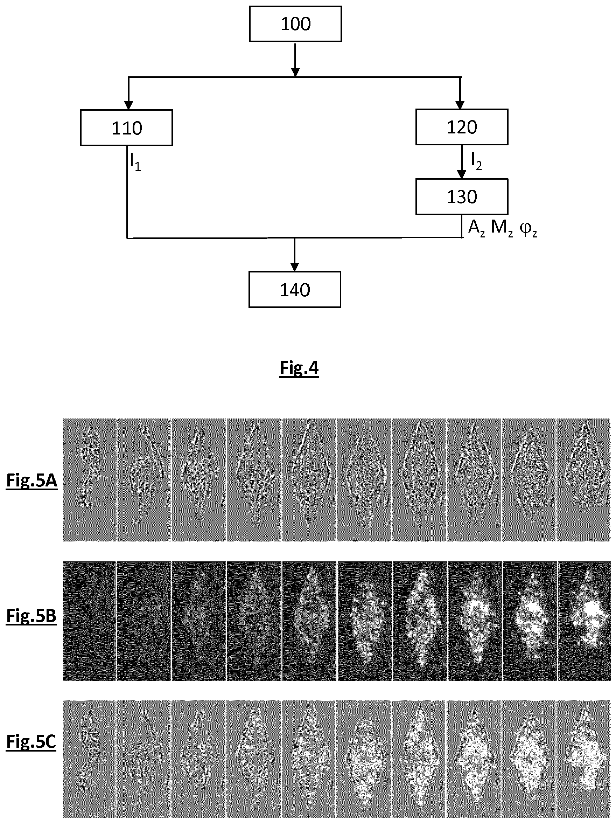

La figure 4 illustre les principales étapes du procédé :

- étape 100 : disposition de l'échantillon sur le support d'échantillon ;
- étape 110 : illumination de l'échantillon dans la première bande spectrale et acquisition d'une première image $I_1$ de l'échantillon, correspondant à la modalité de fluorescence ;
- étape 120 : illumination de l'échantillon dans la deuxième bande spectrale, et acquisition d'une deuxième image $I_2$ de l'échantillon, défocalisée ;
- étape 130 : à partir de la deuxième image, application d'un opérateur de reconstruction holographique pour obtenir, de préférence, une image de phase de l'échantillon, pour obtenir une information structurelle de l'échantillon ;
- étape 140 : superposition de l'image de fluorescence et de l'image résultant de reconstruction holographique.

L'ordre chronologique selon lequel sont mises en œuvre les étapes 110 et 120 est indifférent. Dans un autre essai expérimental, des cellules vivantes de type MDCK (Madin-Darby Canine Kidney), cultivées dans un incubateur, ont été marquées avec agent fluorescent Hoechst 33342, spécifique de l'ADN. Six heures après le marquage, on a acquis une première image de fluorescence de l'échantillon. L'échantillon était alors illuminé dans le proche UV, pour émettre une onde lumineuse de fluorescence dans la bande spectrale $\Delta\lambda_f$ centrée sur 452 nm. On a également acquis deuxième image défocalisée de l'échantillon, en éclairant ce dernier dans une deuxième bande spectrale $\Delta\lambda_2$ centrée sur 543.5 nm et de largeur de bande 2.1 nm. A cette deuxième bande spectrale correspond un plan focal objet distant de 60 μm du plan focal objet correspondant à la longueur d'onde de fluorescence de l'agent fluorescent. On a appliqué le procédé décrit en lien avec les figures 3B et 3C à l'image défocalisée de l'échantillon, de façon à obtenir une image de phase, représentative de la structure de l'échantillon. On a ensuite superposé l'image de fluorescence et l'image de phase. Ce mode opératoire a été renouvelé plusieurs fois, à intervalle régulier, sur une durée totale de 75 heures. Les figures 5A, 5B et 5C représentent respectivement les images structurelles de l'échantillon (images de phase), les images de fluorescence de l'échantillon ainsi que les superpositions image de fluorescence sur image structurelle.

Selon un mode de réalisation, le système optique 20 est tel lorsque que lorsque le plan image correspond au plan de détection $P_{30}$, le plan objet du système optique est confondu avec le plan $P_{10}$ de l'échantillon, ou sensiblement confondu avec le plan de l'échantillon, et cela dans une bande spectrale de fluorescence $\Delta\lambda_f$ étendue. Par sensiblement confondu, on entend confondu à une distance de plus ou moins 30 μm près. Par bande spectrale étendue, on entend selon une bande spectrale dont la largeur au moins égale à 150 μm, ou de préférence au moins 200 μm.. Dans une deuxième bande spectrale $\Delta\lambda_2$, en dehors de la bande spectrale de fluorescence $\Delta\lambda_f$, lorsque le plan image correspond au plan de détection $P_{30}$, le plan objet $P_2$ est décalé par rapport au plan de l'échantillon $P_{10}$, selon un décalage supérieur à 50 μm. Selon ce mode de réalisation, du fait de la largeur de la bande spectrale de fluorescence, il est possible d'obtenir une image de fluorescence de plusieurs agents fluorescents, et cela simultanément.

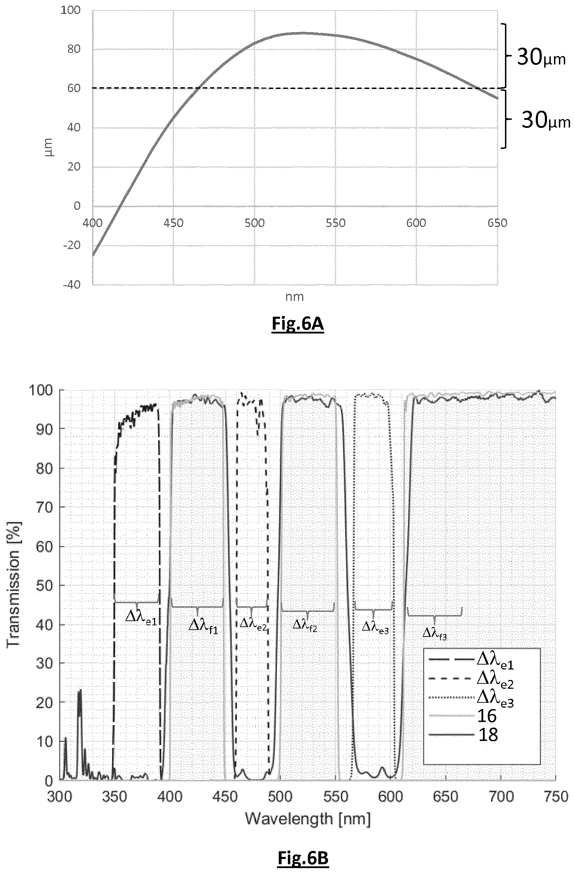

La figure 6A montre une courbe représentative du chromatisme d'un système optique 20 formé par l'objectif 21 Motic précédemment décrit et une lentille de tube 22 doublet. La courbe représente l'évolution de la distance focale en fonction de la longueur d'onde. L'axe des abscisses correspond à la longueur d'onde et l'axe des ordonnées correspond à variation de distance focale, par rapport à une configuration de mise au point à la longueur d'onde 420 nm. Entre 440 nm et 650 nm, la variation de distance focale n'est pas significative : elle varie dans un intervalle de ± 30 μm autour de 60 μm. Par contre, en dessous de 440 nm, la variation de distance focale est importante.

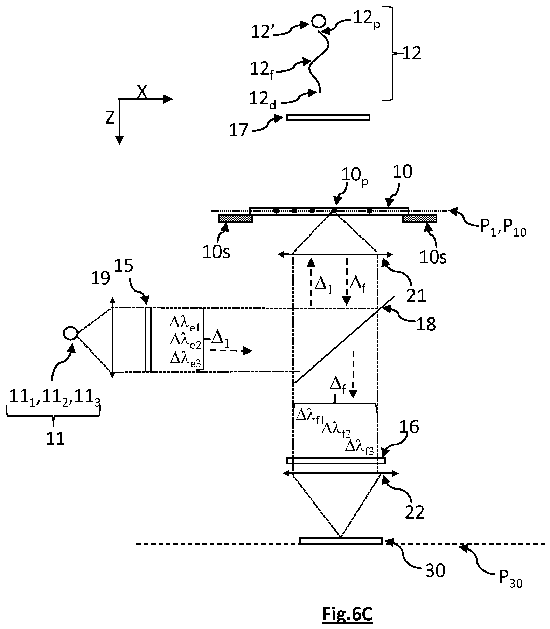

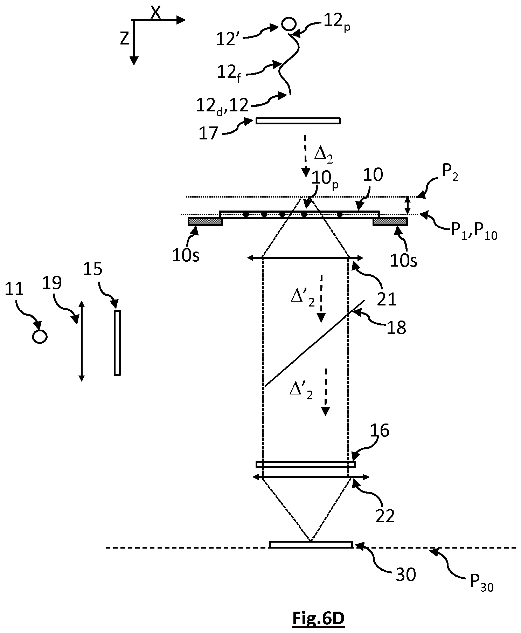

Le dispositif représenté sur les figures 6C et 6D met en œuvre un tel objectif 20. La figure 6C montre une configuration d'acquisition d'une image de fluorescence focalisée. La figure 6D montre une configuration d'une image défocalisée de l'échantillon.

Sur la figure 6C, la première source de lumière 11 est couplée à une lentille de collimation 19. En aval de la lentille de collimation 19, un filtre d'excitation 15 permet d'ajuster la première bande spectrale $\Delta\lambda_1$ de telle sorte que l'onde lumineuse $\Delta_1$ illuminant l'échantillon corresponde à tout ou partie de la bande spectrale d'excitation $\Delta\lambda_e$ de différents agents fluorescents. Le filtre d'excitation 15 comporte trois bandes passantes d'excitation élémentaires $\Delta\lambda_{e1}$, $\Delta\lambda_{e2}$, $\Delta\lambda_{e3}$. Les bandes spectrales d'excitation élémentaires $\Delta\lambda_{e1}$, $\Delta\lambda_{e2}$, et $\Delta\lambda_{e3}$ sont distinctes les unes des autres. Les trois bandes spectrales d'excitation élémentaires $\Delta\lambda_{e1}$, $\Delta\lambda_{e2}$, et $\Delta\lambda_{e3}$, sont représentées sur la figure 6B. Les trois bandes spectrales d'excitation élémentaires $\Delta\lambda_{e1}$, $\Delta\lambda_{e2}$, $\Delta\lambda_{e3}$ correspondent respectivement aux bandes spectrales d'excitation du DAPI, précédemment décrit, de la Green Fluorescent Protein (GFP), et de la protéine mCherry. La GFP et la protéine mCherry sont des agents fluorescents connus de l'homme du métier.

La première source de lumière comporte trois sources de lumière élémentaires, $11_1$, $11_2$, $11_3$, permettant d'émettre la première onde lumineuse $\Delta_1$ simultanément ou successivement dans les trois bandes spectrales d'excitation élémentaires $\Delta\lambda_{e1}$, $\Delta\lambda_{e2}$, et $\Delta\lambda_{e3}$. Lorsque le capteur d'image 30 est monochrome, les trois sources de lumière élémentaires $11_1$, $11_2$, $11_3$ sont activées successivement.

La première onde lumineuse $\Delta_1$ se propage jusqu'à un miroir dichroïque 18. La figure 6B montre la bande spectrale de transmission du miroir dichroïque 18. Elle comporte trois bandes spectrales élémentaires $\Delta\lambda_{f1}$, $\Delta\lambda_{f2}$, $\Delta\lambda_{f3}$, qui comportent respectivement les pics d'émission du DAPI, de la GFP et de mCherry. Le miroir dichroïque 18 réfléchit les trois bandes spectrales d'excitation élémentaires $\Delta\lambda_{e1}$, $\Delta\lambda_{e2}$, $\Delta\lambda_{e3}$ vers l'échantillon 10. Les particules de ce dernier, marquées par plusieurs agents fluorescents $10_{f1}$, $10_{f2}$, $10_{f3}$, émettent une lumière de fluorescence dans tout ou partie des bandes spectrales de fluorescence élémentaires $\Delta\lambda_{f1}$, $\Delta\lambda_{f2}$, $\Delta\lambda_{f3}$. Il se forme ainsi une onde lumineuse de fluorescence $\Delta_f$. Compte tenu de la bande spectrale de transmission du miroir dichroïque 18, l'onde de fluorescence $\Delta_f$ est transmise par ce dernier et se propage jusqu'au capteur d'image 30.

Le système optique 20 est disposé de telle sorte que dans chaque bande spectrale de fluorescence élémentaires $\Delta\lambda_{f1}$, $\Delta\lambda_{f2}$, $\Delta\lambda_{f3}$, le premier plan focal objet $P_1$ corresponde au plan $P_{10}$ selon lequel s'étend l'échantillon 10, en tenant compte de l'écart de $\pm 30$ $\mu$m évoqué en lien avec la figure 6A. En fonction de l'activation des sources de lumières élémentaires, on obtient ainsi successivement des premières images de la fluorescence de l'échantillon selon plusieurs bandes de fluorescence. Chaque première image est acquise selon une configuration focalisée. Elle est donc nette. Cela permet d'obtenir une première image $I_1$ nette montrant simultanément ou successivement la répartition de plusieurs agents fluorescents dans l'échantillon.

Le capteur d'image 30 est un capteur CMOS IDS UI-1480SE, monochrome, comportant 2560 x 1920 pixels, la taille des pixels étant de 2.2 $\mu$m.

La figure 6D montre une modalité d'observation de l'échantillon 10 selon une configuration défocalisée. L'échantillon 10 est illuminé par une deuxième source de lumière 12, dans une deuxième bande spectrale $\Delta\lambda_2$. La source de lumière 12 comporte :

- une source lumineuse 12' ;
- une fibre optique $12_f$, s'étendant entre une extrémité proximale $12_p$ et une extrémité distale $12_d$.

L'extrémité proximale $12_p$ de la fibre optique $12_f$ est disposée face à la source lumineuse 12'. La deuxième source de lumière 12 est configurée pour émettre une deuxième onde lumineuse $\Delta_2$ dans une deuxième bande spectrale $\Delta\lambda_2$. La deuxième onde lumineuse $A_2$, émise par la deuxième source de lumière, se propage selon un axe de propagation Z. Un filtre passe bande 17 permet de réduire la deuxième bande spectrale $\Delta\lambda_2$, cette dernière étant centrée sur 420 nm $\pm$ 5 nm.

Le système optique 20 est tel que dans la deuxième bande spectrale $\Delta\lambda_2$, le deuxième plan objet $P_2$ est décalé, d'une distance de défocalisation par rapport au premier plan objet $P_1$, ce dernier correspondant au plan $P_{10}$ selon lequel s'étend l'échantillon 10. Le plan image, conjugué du deuxième plan focal objet $P_2$, est le plan de détection $P_{30}$. Ainsi, selon cette configuration, le capteur d'image 30 acquiert une deuxième image $I_2$ défocalisée de l'échantillon 10, dans la deuxième bande spectrale $\Delta\lambda_2$.

Alternativement, le deuxième plan objet $P_2$ correspond au plan $P_{10}$ selon lequel s'étend l'échantillon 10, et le plan image, dans la deuxième bande spectrale $\Delta\lambda_2$, est décalé par rapport au plan de détection $P_{30}$ d'une distance de défocalisation.

La distance de défocalisation est ici de 70 $\mu$m. Selon cette configuration, le capteur d'image 30 acquiert une deuxième image $I_2$ défocalisée de l'échantillon 10, dans la deuxième bande spectrale $\Delta\lambda_2$.

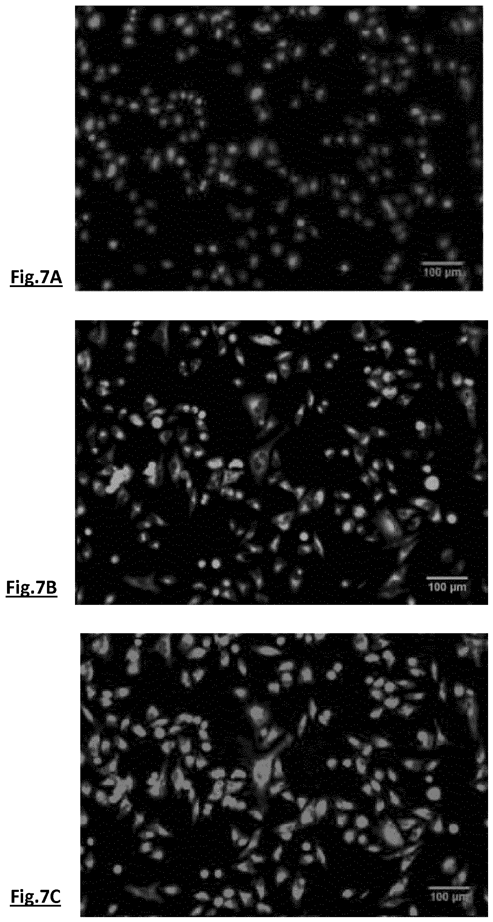

Les figures 7A, 7B et 7C sont des premières images $I_1$ formées par le capteur d'image, respectivement durant l'activation des sources de lumière élémentaires $11_1$, $11_2$ et $11_3$.

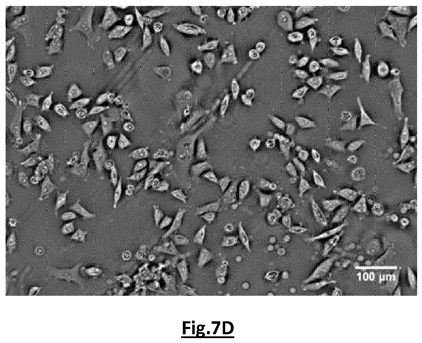

L'échantillon 10 comportait des cellules Hela dans un milieu de culture. L'échantillon 10 a préalablement fait l'objet d'un marquage à l'aide des trois agents fluorescents $10_{11}$ (DAPI), $10_{f2}$ (GFP), $10_{f3}$ (mCherry) précédemment décrits. Les figures 7A, 7B et 7C sont respectivement représentatives de la distribution spatiale des trois agents fluorescents. On voit par exemple que la figure 7A montre le marquage des noyaux des cellules. La figure 7D représente une image de phase obtenue après reconstruction de la deuxième image $I_2$, qui est une image défocalisée.

L'image de phase est obtenue après reconstruction holographique de la deuxième image $I_2$.

L'intérêt de ce mode de réalisation est l'obtention successive d'images de fluorescences correspondant à différents agents fluorescents.

Le dispositif, par l'absence réglage des plans focaux entre deux acquisitions d'images selon des modalités différentes, est compact et peut être aisément disposé à l'intérieur d'un incubateur. Il permet une observation d'un échantillon en disposant d'un champ d'observation important. Ce champ d'observation peut par exemple s'étendre sur une surface de 4 mm$^2$, ce qui permet une observation simultanée d'un grand nombre d'espèces biologiques. La surface dépend du grandissement du système optique.

**Revendications**

1. Procédé d'observation d'un échantillon fluorescent (10), s'étendant selon un plan (P$_{10}$), dit plan de l'échantillon, l'échantillon comportant un agent fluorescent (10$_f$) apte à émettre une onde lumineuse de fluorescence ($\Delta_f$), dans une bande spectrale de fluorescence ($\Delta\lambda_f$), lorsqu'il est illuminé par une onde lumineuse d'excitation ($\Delta_e$), dans une bande spectrale d'excitation ($\Delta\lambda_e$), le procédé comportant les étapes suivantes :

   a) illumination de l'échantillon (10) à l'aide d'une première source de lumière (11), selon une première bande spectrale d'illumination ($\Delta\lambda_1$), la première bande spectrale d'illumination s'étendant dans la bande spectrale d'excitation ($\Delta\lambda_e$) et acquisition d'une première image de l'échantillon (I$_1$), dans la bande spectrale de fluorescence, à l'aide d'un capteur d'image (30) ;
   b) illumination de l'échantillon (10) à l'aide d'une deuxième source de lumière (12), ponctuelle, selon une deuxième bande spectrale ($\Delta\lambda_2$), en dehors de la bande spectrale de fluorescence, l'échantillon s'étendant entre la deuxième source de lumière (12) et le capteur d'image (30), et acquisition d'une deuxième image de l'échantillon (I$_2$), dans la deuxième bande spectrale, à l'aide du capteur d'image (30);

   le capteur d'image (30) définissant un plan de détection (P$_{30}$), le capteur d'image étant couplé à un système optique (20), disposé entre le capteur d'image et l'échantillon (10), le système optique (20) présentant des aberrations chromatiques telles que :

   - dans la bande spectrale de fluorescence ($\Delta\lambda_f$), le plan focal objet du système optique (P$_1$) est confondu avec le plan de l'échantillon (P$_{10}$), le plan image du système optique étant confondu avec le plan de détection (P$_{30}$) ;
   - dans la deuxième bande spectrale ($\Delta\lambda_2$), le plan focal objet du système optique (P$_2$) est décalé par rapport au plan de l'échantillon (P$_{10}$), ou le plan focal image du système optique est décalé par rapport au plan de détection (P$_{30}$), le décalage étant supérieur à 20 $\mu$m ;

   de telle sorte que :

   - la première image (I$_1$) est une image focalisée de l'échantillon, représentative d'une fluorescence de l'échantillon ;
   - la deuxième image (I$_2$) est une image défocalisée de l'échantillon, représentative d'une structure de l'échantillon ;

   le procédé étant tel que lequel le capteur d'image (30), le système optique (20) et l'échantillon (10) sont fixes entre l'acquisition de la première image (I$_1$) et l'acquisition de la deuxième image (I$_2$), le procédé comportant une étape c) d'application d'un opérateur de reconstruction holographique (*h*) à partir de la deuxième image (I$_2$), de façon à obtenir une image reconstruite de l'échantillon (A$_z$, M$_z$, $\varphi_z$) dans un plan de reconstruction (P$_z$).

2. Procédé selon l'une quelconque des revendications précédentes, dans lequel la deuxième bande spectrale ($\Delta\lambda_2$) est décalée, par rapport à la bande spectrale de fluorescence ($\Delta\lambda_f$), d'au moins 150 nm et de préférence d'au moins 200 nm.

3. Procédé selon l'une quelconque des revendications précédentes, dans lequel dans la deuxième bande spectrale ($\Delta\lambda_2$), le plan focal objet (P$_2$) est décalé d'une distance inférieure à 1 mm du plan de l'échantillon, et de préférence d'une distance inférieure à 500 $\mu$m.

4. Procédé selon l'une quelconque des revendications précédentes, dans lequel :

   - la première source de lumière (11) est disposée dans un demi-espace délimité par le plan de l'échantillon (P$_{10}$) et comprenant le capteur d'image (30) ;
   - ou la première source de lumière (11) est disposée dans un demi-espace délimité par le plan de l'échantillon (P$_{10}$) et comprenant la deuxième source de lumière (12).

5. Procédé selon l'une quelconque des revendications précédentes, dans lequel les étapes a) et b) sont réalisées successivement, l'étape a) étant réalisée avant l'étape b) ou réciproquement.

6. Procédé selon l'une quelconque des revendications précédentes, dans lequel la bande spectrale de fluorescence ($\Delta\lambda_f$) s'étend selon au moins 150 nm, voire 200 nm, de façon à comporter différents pics de fluorescence de différents agents fluorescents.

7. Dispositif (1) d'observation d'un échantillon fluorescent (10), l'échantillon étant apte à émettre une onde lumineuse ($\Delta_f$) dans une bande spectrale de fluorescence ($\Delta\lambda_f$) lorsqu'il est illuminé selon une bande spectrale d'excitation ($\Delta\lambda_e$), le dispositif comportant :

- une première source de lumière (11), configurée pour émettre une onde lumineuse dans une première bande spectrale ($\Delta\lambda_1$), s'étendant dans une bande spectrale d'excitation ($\Delta\lambda_e$) de l'échantillon ;
- une deuxième source de lumière (12), ponctuelle, configurée pour émettre une onde lumineuse selon une deuxième bande spectrale ($\Delta\lambda_2$), en dehors de la bande spectrale de fluorescence ($\Delta\lambda_f$) de l'échantillon ;
- un capteur d'image (30), optiquement couplé à un système optique (20), le capteur d'image définissant un plan de détection ($P_{30}$);
- un support (10s), destiné à recevoir l'échantillon, de telle sorte que l'échantillon s'étende selon un plan ($P_{10}$), dit plan d'échantillon, ce dernier s'étendant entre le système optique (20) la deuxième source de lumière (12) ;
- le système optique (20) présentant des aberrations chromatiques telles que le système optique (20) définisse :

• dans la bande spectrale de fluorescence ($\Delta\lambda_f$), un premier plan focal objet ($P_1$), confondu avec le plan de l'échantillon ($P_{10}$), et un premier plan focal image confondu avec le plan de détection ($P_{30}$);
• dans la deuxième bande spectrale ($\Delta\lambda_2$), un deuxième plan focal objet ($P_2$), distant du plan de l'échantillon ($P_{10}$), ou un deuxième plan focal image distant du plan de détection ($P_{30}$), d'au moins 20 $\mu$m,

de telle sorte que le capteur d'image (30) est configuré pour acquérir, sans déplacer le capteur d'image (30), le système optique (20) et l'échantillon (10) :

- une image nette de l'échantillon ($I_1$), dans la bande spectrale de fluorescence ($\Delta\lambda_f$), lorsque ce dernier est illuminé par la première source de lumière (11);
- une image défocalisée de l'échantillon ($I_2$), dans la deuxième bande spectrale ($\Delta\lambda_2$), lorsque l'échantillon est illuminé par la deuxième source de lumière (12) ;

le dispositif comportant également un processeur (32), apte à appliquer un opérateur de reconstruction holographique ($h$) à une image acquise par le capteur d'image (20), de façon à reconstruire une image représentative de l'échantillon ($A_z, M_z, \varphi_z$), dans un plan de reconstruction ($P_z$) distant d'un plan de détection ($P_{30}$) selon lequel s'étend le capteur d'image (30), et de préférence dans le plan de l'échantillon ($P_{10}$).

8. Dispositif selon la revendication 7, dans lequel la distance entre le premier plan objet ($P_1$) et le deuxième plan objet ($P_2$) est inférieure à 1 mm, et de préférence inférieure à 500 $\mu$m.

9. Dispositif selon l'une quelconque des revendications 7 à 8, comportant un filtre (16), s'étendant entre l'échantillon (10) et le capteur d'image (30), présentant une bande passante, dite de fluorescence correspondant à la bande spectrale de fluorescence ($\Delta\lambda_f$).

10. Dispositif selon la revendication 9, dans lequel le filtre (16) présente une bande passante, distincte de la bande passante de fluorescence, correspondant à la deuxième bande spectrale ($\Delta\lambda_2$).

11. Dispositif selon la revendication 9 ou la revendication 10, dans lequel la bande passante de fluorescence du filtre (16) présente une largeur de bande inférieure à 100 nm.

12. Dispositif selon l'une quelconque des revendications 7 à 11, dans lequel :

- la première source de lumière (11) est disposés dans un demi-espace délimité par le plan de l'échantillon ($P_{10}$) et comprenant le capteur d'image (30) ;
- ou la première source de lumière (11) est disposée dans un demi-espace délimité par le plan de l'échantillon ($P_{10}$) et comprenant la deuxième source de lumière (12).

**13.** Dispositif selon l'une quelconque des revendications 7 à 12, dans lequel le dispositif est configuré pour former une image nette de l'échantillon selon une bande spectrale de fluorescence s'étendant selon au moins 150 nm ou au moins 200 nm.

**Patentansprüche**

**1.** Verfahren zur Beobachtung einer fluoreszierenden Probe (10), die sich gemäß einer Ebene ($P_{10}$), der Ebene der Probe, erstreckt, wobei das Verfahren ein fluoreszierendes Mittel ($10_f$) aufweist, das geeignet ist, eine Fluoreszenz-lichwelle ($\Delta f$) in einem Fluoreszenzspektralband ($\Delta\lambda_f$) abzugeben, wenn es von einer Erregungslichtwelle ($\Delta_e$) in einem Erregungsspektralband ($\Delta\lambda_e$) beleuchtet wird, wobei das Verfahren die folgenden Schritte aufweist:

a) Beleuchten der Probe (10) mithilfe einer ersten Lichtquelle (11) gemäß einem ersten Beleuchtungsspektral-band ($\Delta\lambda_1$), wobei sich das erste Beleuchtungsspektralband in dem Erregungsspektralband ($\Delta\lambda_e$) erstreckt, und Erfassen eines ersten Bilds der Probe ($I_1$) in dem Fluoreszenzspektralband mithilfe eines Bildsensors (30);
b) Beleuchten der Probe (10) mithilfe einer zweiten, punktuellen Lichtquelle (12) gemäß einem zweiten Spek-tralband ($\Delta\lambda_2$) außerhalb des Fluoreszenzspektralbands, wobei sich die Probe zwischen der zweiten Lichtquelle (12) und dem Bildsensor (30) erstreckt, und Erfassen eines zweiten Bilds der Probe ($I_2$) im zweiten Spektralband mithilfe des Bildsensors (30);

wobei der Bildsensor (30) eine Detektionsebene ($P_{30}$) definiert, wobei der Bildsensor an ein optisches System (20) gekoppelt ist, das zwischen dem Bildsensor und der Probe (10) angeordnet ist, wobei das optische System (20) chromatische Aberrationen aufweist, so dass:

- im Fluoreszenzspektralband ($\Delta\lambda_f$) die Objektbrennebene des optischen Systems ($P_1$) mit der Ebene der Probe ($P_{10}$) zusammenfällt, wobei die Bildebene des optischen Systems mit der Detektionsebene ($P_{30}$) zusammenfällt;
- im zweiten Spektralband ($\Delta\lambda_2$) die Objektbrennebene des optischen Systems ($P_2$) bezogen auf die Ebene der Probe ($P_{10}$) versetzt ist, oder die Bildbrennebene des optischen Systems bezogen auf die Detektionsebene ($P_{30}$) versetzt ist, wobei der Versatz mehr als 20 $\mu$m beträgt;

so dass:

- das erste Bild ($I_1$) ein fokussiertes Bild der Probe ist, das eine Fluoreszenz der Probe darstellt;
- das zweite Bild ($I_2$) ein defokussiertes Bild der Probe ist, das eine Struktur der Probe darstellt;

wobei das Verfahren so ausgelegt ist, dass der Bildsensor (30), das optische System (20) und die Probe (10) zwischen der Erfassung des ersten Bilds ($I_1$) und der Erfassung des zweiten Bilds ($I_2$) fest sind, wobei das Verfahren einen Schritt c) des Anwendens eines Operators zur holografischen Rekonstruierung ($h$) ausgehend von dem zweiten Bild ($I_2$) aufweist, um ein rekonstruiertes Bild der Probe ($A_z$, $M_z$, $\varphi_z$) in einer Rekonstruierungsebene ($P_z$) zu erhalten.

**2.** Verfahren nach einem der vorhergehenden Ansprüche, wobei das zweite Spektralband ($\Delta\lambda_2$) bezogen auf das Fluoreszenzspektralband ($\Delta\lambda_f$) um mindestens 150 nm und vorzugsweise um mindestens 200 nm versetzt ist.

**3.** Verfahren nach einem der vorhergehenden Ansprüche, wobei im zweiten Spektralband ($\Delta\lambda_2$) die Objektbrennebene ($P_2$) um einen Abstand unter 1 mm von der Ebene der Probe versetzt ist, und vorzugsweise um einen Abstand unter 500 $\mu$m.

**4.** Verfahren nach einem der vorhergehenden Ansprüche, wobei:

- die erste Lichtquelle (11) in einem Halbraum angeordnet ist, der von der Ebene der Probe ($P_{10}$) begrenzt ist und den Bildsensor (30) umfasst;
- oder die erste Lichtquelle (11) in einem Halbraum angeordnet ist, der von der Ebene der Probe ($P_{10}$) begrenzt ist und die zweite Lichtquelle (12) umfasst.

**5.** Verfahren nach einem der vorhergehenden Ansprüche, wobei die Schritte a) und b) nacheinander durchgeführt werden, wobei der Schritt a) vor dem Schritt b) durchführt wird oder wechselseitig.

6. Verfahren nach einem der vorhergehenden Ansprüche, wobei sich das Fluoreszenzspektralband ($\Delta\lambda_f$) über mindestens 150 nm, ja sogar 200 nm erstreckt, so dass es verschiedene Fluoreszenzspitzen verschiedener Fluoreszenzmittel aufweist.

7. Vorrichtung (1) zur Beobachtung einer fluoreszierenden Probe (10), wobei die Probe geeignet ist, eine Lichtquelle ($\Delta_f$) in einem Fluoreszenzspektralband ($\Delta\lambda_f$) abzugeben, wenn sie gemäß einem Erregungsspektralband ($\Delta\lambda_e$) beleuchtet wird, die Vorrichtung aufweisend:

   - eine ersten Lichtquelle (11), die dazu ausgebildet ist, eine Lichtwelle in einem ersten Spektralband ($\Delta\lambda_1$) abzugeben, das sich in einem Erregungsspektralband ($\Delta\lambda_e$) der Probe erstreckt;
   - eine zweite, punktuelle Lichtquelle (12), die dazu ausgebildet ist, eine Lichtwelle gemäß einem zweiten Spektralband ($\Delta\lambda_2$) außerhalb des Fluoreszenzspektralbands ($\Delta\lambda_f$) der Probe abzugeben;
   - einen Bildsensor (30), der optisch an ein optisches System (20) gekoppelt ist, wobei der Bildsensor eine Detektionsebene ($P_{30}$) definiert;
   - einen Träger (10s), der dazu bestimmt ist, die Probe so aufzunehmen, dass sich die Probe gemäß einer Ebene ($P_{10}$), der Probenebene, erstreckt, wobei sich letztere zwischen dem optischen System (20) und der zweiten Lichtquelle (12) erstreckt;
   - wobei das optische System (20) chromatische Aberrationen aufweist, so dass das optische System (20) Folgendes definiert:
   - im Fluoreszenzspektralband ($\Delta\lambda_f$) eine erste Objektbrennebene ($P_1$), die mit der Ebene der Probe ($P_{10}$) zusammenfällt, und eine erste Bildbrennebene, die mit der Detektionsebene ($P_{30}$) zusammenfällt;
   - im zweiten Spektralband ($\Delta\lambda_2$) eine zweite Objektbrennebene ($P_2$), die von der Ebene der Probe ($P_{10}$) beabstandet ist, oder eine zweite Bildbrennebene, die von der Detektionsebene ($P_{30}$) um mindestens 20 $\mu$m beabstandet ist,

   so dass der Bildsensor (30) dazu ausgebildet ist, Folgendes zu erfassen, ohne den Bildsensor (30), das optische System (20) und die Probe (10) zu bewegen:

   - ein scharfes Bild der Probe ($I_1$) im Fluoreszenzspektralband ($\Delta\lambda_f$), wenn diese von der ersten Lichtquelle (11) beleuchtet wird;
   - ein defokussiertes Bild der Probe ($I_2$) im zweiten Spektralband ($\Delta\lambda_2$), wenn die Probe von der zweiten Lichtquelle (12) beleuchtet wird;

   wobei die Vorrichtung ebenfalls einen Prozessor (32) aufweist, der geeignet ist, einen Operator zur holografischen Rekonstruierung ($h$) auf ein Bild anzuwenden, das vom Bildsensor (20) erfasst wurde, um ein Bild, das die Probe ($A_z$, $M_z$, $\varphi_z$), darstellt, in einer Rekonstruierungsebene ($P_z$) zu rekonstruieren, die von einer Detektionsebene ($P_{30}$) beabstandet ist, gemäß welcher sich der Bildsensor (30) erstreckt, und vorzugsweise in der Ebene der Probe ($P_{10}$).

8. Vorrichtung nach Anspruch 7, wobei der Abstand zwischen der ersten Objektebene ($P_1$) und der zweiten Objektebene ($P_2$) kleiner als 1 mm und vorzugsweise kleiner als 500 um ist.

9. Vorrichtung nach einem der Ansprüche 7 bis 8, aufweisend einen Filter (16), der sich zwischen der Probe (10) und dem Bildsensor (30) erstreckt, der einen Fluoreszenz-Durchlassbereich aufweist, der dem Fluoreszenzspektralband ($\Delta\lambda_f$) entspricht.

10. Vorrichtung nach Anspruch 9, wobei der Filter (16) einen Durchlassbereich aufweist, der sich vom Fluoreszenz-Durchlassbereich unterscheidet, der dem zweiten Spektralband ($\Delta\lambda_2$) entspricht.

11. Vorrichtung nach Anspruch 9 oder 10, wobei der Fluoreszenz-Durchlassbereich des Filters (16) eine Bandbreite unter 100 nm aufweist.

12. Vorrichtung nach einem der Ansprüche 7 bis 11, wobei:

   - die erste Lichtquelle (11) in einem Halbraum angeordnet ist, der von der Ebene der Probe ($P_{10}$) begrenzt ist und den Bildsensor (30) umfasst;
   - oder die erste Lichtquelle (11) in einem Halbraum angeordnet ist, der von der Ebene der Probe ($P_{10}$) begrenzt ist und die zweite Lichtquelle (12) umfasst.

**13.** Vorrichtung nach einem der Ansprüche 7 bis 12, wobei die Vorrichtung dazu ausgebildet ist, ein scharfes Bild der Probe gemäß einem Fluoreszenzspektralband zu bilden, das sich über mindestens 150 nm oder mindestens 200 nm erstreckt.

**Claims**

**1.** Method for observing a fluorescent sample (10), lying in a plane ($P_{10}$) referred to as the sample plane, the sample comprising a fluorescent agent ($10_f$) able to emit a fluorescence light wave ($\Delta_f$), in a fluorescence spectral band ($\Delta\lambda_f$), when it is illuminated by an excitation light wave ($\Delta_e$), in an excitation spectral band ($\Delta\lambda_e$), the method comprising the following steps:

a) illuminating the sample (10) using a first light source (11), in a first illumination spectral band ($\Delta\lambda_1$), the first illumination spectral band lying in the excitation spectral band ($\Delta\lambda_e$), and acquiring a first image ($I_1$) of the sample, in the fluorescence spectral band, using an image sensor (30);
b) illuminating the sample (10) using a point second light source (12), in a second spectral band ($\Delta\lambda_2$), outside of the fluorescence spectral band, the sample lying between the second light source (12) and the image sensor (30), and acquiring a second image ($I_2$) of the sample, in the second spectral band, using the image sensor (30);

the image sensor (30) defining a detection plane ($P_{30}$), the image sensor being coupled to an optical system (20) placed between the image sensor and the sample (10), the optical system (20) having chromatic aberrations such that:

- in the fluorescence spectral band ($\Delta\lambda_f$), the object focal plane ($P_1$) of the optical system is coincident with the sample plane ($P_{10}$), the image plane of the optical system being coincident with the detection plane ($P_{30}$);
- in the second spectral band ($\Delta\lambda_2$), the object focal plane ($P_2$) of the optical system is offset with respect to the sample plane ($P_{10}$), or the image focal plane of the optical system is offset with respect to the detection plane ($P_{30}$), the offset being larger than 20 $\mu$m;

such that:

- the first image ($I_1$) is a focused image of the sample, which image is representative of a fluorescence of the sample;
- the second image ($I_2$) is a defocused image of the sample, which image is representative of a structure of the sample;

the method being such that the image sensor (30), the optical system (20) and the sample (10) remain stationary between the acquisition of the first image ($I_1$) and the acquisition of the second image ($I_2$), the method comprising a step c) of applying a holographic reconstruction operator ($h$) to the second image ($I_2$), so as to obtain a reconstructed image ($A_z, M_z, \varphi_z$) of the sample in a reconstruction plane ($P_z$).

**2.** Method according to any one of the preceding claims, wherein the second spectral band ($\Delta\lambda_2$) is offset, with respect to the fluorescence spectral band ($\Delta\lambda_f$), by at least 150 nm and preferably by at least 200 nm.

**3.** Method according to either one of the preceding claims, wherein, in the second spectral band ($\Delta\lambda_2$), the object focal plane ($P_2$) is offset from the sample plane by a distance smaller than 1 mm, and preferably by a distance smaller than 500 $\mu$m.

**4.** Method according to any one of the preceding claims, wherein:

- the first light source (11) is placed in a half-space bounded by the sample plane ($P_{10}$) and comprising the image sensor (30);
- or the first light source (11) is placed in a half-space bounded by the sample plane ($P_{10}$) and comprising the second light source (12).

**5.** Method according to any one of the preceding claims, wherein steps a) and b) are carried out successively, step a) being carried out before step b) or vice versa.

**6.** Method according to any one of the preceding claims, wherein the fluorescence spectral band ($\Delta\lambda_f$) has an extent of at least 150 nm, or even 200 nm, so as to comprise various fluorescence peaks of various fluorescent agents.

7. Device (1) for observing a fluorescent sample (10), the sample being able to emit a light wave ($\Delta_f$) in a fluorescence spectral band ($\Delta\lambda_f$) when it is illuminated in an excitation spectral band ($\Delta\lambda_e$), the device comprising:

   - a first light source (11) configured to emit a light wave in a first spectral band ($\Delta\lambda_1$) lying in an excitation spectral band ($\Delta\lambda_e$) of the sample;
   - a point second light source (12) configured to emit a light wave in a second spectral band ($\Delta\lambda_2$) outside of the fluorescence spectral band ($\Delta\lambda_f$) of the sample;
   - an image sensor (30) that is optically coupled to an optical system (20), the image sensor defining a detection plane ($P_{30}$);
   - a holder (10s), intended to receive the sample, such that the sample lies in a plane ($P_{10}$), called the sample plane, the latter lying between the optical system (20) and the second light source (12);
   - the optical system (20) having chromatic aberrations such that the optical system (20) defines:

      ■ in the fluorescence spectral band ($\Delta\lambda_f$), a first object focal plane ($P_1$) that is coincident with the sample plane ($P_{10}$) and a first image focal plane coincident with the detection plane ($P_{30}$);
      ■ in the second spectral band ($\Delta\lambda_2$), a second object focal plane ($P_2$) that is distant from the sample plane ($P_{10}$) by at least 20 $\mu$m, or a second image focal plane that is distant from the detection plane ($P_{30}$) by at least 20 $\mu$m ; such that the image sensor (30) is configured to acquire, without moving the image sensor (30), the optical system (20) and the sample (10):

      - a clear image ($I_1$) of the sample, in the fluorescence spectral band ($\Delta\lambda_f$), when the sample is illuminated by the first light source (11);
      - a defocused image ($I_2$) of the sample, in the second spectral band ($\Delta\lambda_2$), when the sample is illuminated by the second light source (12);

   the device also comprising a processor (32) able to apply a holographic reconstruction operator ($h$) to an image acquired by the image sensor (20), so as to reconstruct an image ($A_z, M_z, \varphi_z$) representative of the sample in a reconstruction plane ($P_z$) that is distant from a detection plane ($P_{30}$) in which the image sensor (30) lies, and preferably in the sample plane ($P_{10}$).

8. Device according to Claim 7, wherein the distance between the first object plane ($P_1$) and the second object plane ($P_2$) is smaller than 1 mm, and preferably smaller than 500 $\mu$m.

9. Device according to either one of Claims 7 and 8, comprising a filter (16), lying between the sample (10) and the image sensor (30), having a passband, called the fluorescence passband, corresponding to the fluorescence spectral band ($\Delta\lambda_f$).

10. Device according to Claim 9, wherein the filter (16) has a passband, distinct from the fluorescence passband, corresponding to the second spectral band ($\Delta\lambda_2$).

11. Device according to Claim 9 or Claim 10, wherein the fluorescence passband of the filter (16) has a bandwidth narrower than 100 nm.

12. Device according to any one of Claims 7 to 11, wherein:

   - the first light source (11) is placed in a half-space bounded by the sample plane ($P_{10}$) and comprising the image sensor (30);
   - or the first light source (11) is placed in a half-space bounded by the sample plane ($P_{10}$) and comprising the second light source (12).

13. Device according to any one of Claims 7 to 12, wherein the device is configured to form a clear image of the sample in a fluorescence spectral band that has an extent of at least 150 nm or at least 200 nm.

**Fig. 1A**

**Fig. 1B**

**Fig. 1C**

**Fig. 1D**

**Fig. 2A**

**Fig. 2B**

Fig.3A

Fig.3B

Fig.3C

Fig.3D

Fig.4

Fig.5A

Fig.5B

Fig.5C

**Fig.6A**

**Fig.6B**

**Fig.6C**

**Fig.6D**

**Fig.7A**

**Fig.7B**

**Fig.7C**

**Fig.7D**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2016075279 A
- WO 2016097092 A
- US 2011254943 A
- EP 1406081 A
- WO 2017162985 A

**Littérature non-brevet citée dans la description**

- **SEO S et al.** High-Throughput lens-free blood analysis on a chip. *Anal Chem.,* 01 Juin 2010, vol. 82 (11), 4621-4627